# EUROPEAN PATENT APPLICATION

(11) **EP 3 723 032 A1**
(43) Date of publication of application: **14.10.2020**
(21) Application number: 20168688.8
(22) Date of filing: 08.04.2020
(51) Int. Cl.: G06Q 50/26, G06Q 50/10

(54) **AUTOMATED SYSTEM AND METHOD TO EXTRACT AND PRESENT QUANTITATIVE INFORMATION THROUGH PREDICTIVE ANALYSIS OF DATA**

(30) Priority: 08.04.2019 IT 201900005326
(71) Applicant: Regione Lombardia, 20124 Milano (IT)
(72) Inventor: Albonetti, Roberto, 40129 Bologna (IT); Cardani, Angelo, 20070 Cerro al Lambro (IT); De Bartolo, Maurizio, 20124 Milano (IT); Santoro, Matteo, 16145 Genova (IT); Venturi, Alessandro, 20135 Milano (IT)
(74) Representative: Petraz, Gilberto Luigi

(57) **Abstract**

Automated system to extract and present quantitative information through predictive analysis of data, comprising:
a configuration unit (101) able to receive at input data associated to at least one geographical area AG and at least one theme of interest T and to communicate with a process management unit (102) including at least one processor;
a storage and management unit (105) for the data to be processed able to receive at input data associated to at least one geographical area AG and one file of interest T;
a data interrogation and retrieval unit (104) able to interrogate the storage and management unit (105) for the data to be processed based on the requests of the process management unit (102) and to transfer these data to said process management unit (102);
a data processing unit (103) able to communicate with said process management unit (102) which comprises: a unit to select reference geographical areas (103a), defined as the geographical areas most similar to a given geographical area AG with respect to context indicators; a unit to identify the critical performance indicators (103b) that are anomalous in a given geographical area AG with respect to the reference geographical areas; a unit to identify the relevant levers (103c); a unit that generates scenarios (103d) on the levers' indicators and corresponding performance indicators;
a storage and management unit (107) for the processed data;
a visualization and export unit (108) of the processed data and relating to the performed predictive analysis.

## Description

### AREA OF APPLICATION

The following invention relates to an automated system and method to extract and present quantitative information through predictive analysis of data.

The present automated system and method enable the extraction of relevant quantitative information through the analysis of huge amounts of raw data using predictive analysis techniques and the presentation of such information with the purpose of making and sharing policies, to associate with specific strategies of economic growth and sustainable development of the innovation and research ecosystem.

The present invention thus belongs to field of innovative technologies based on artificial intelligence and Big Data applied to the social field with political-administrative direction, with special reference to the innovation and research ecosystem.

In the following description the present invention will be described, without limitations, as a technical system supporting the formulation of political and/or administrative policies, to associate with strategies of economic growth and innovation in general.

### STATE OF THE ART

Usually, in the field of political and/or economic policy making to associate with strategies of economic growth and innovation in general, the process leading from raw data acquisition to the extraction and presentation of relevant quantitative information is only partially analytic and poorly structured, and as such is not replicable.

For example, the political and economic policy making to associate with strategies of economic growth and innovation in general usually follow these steps:
- Stakeholder analysis;
- Problems analysis;
- Objectives analysis;
- Strategic analysis.

This approach is the one followed by the European Union [Common Framework for Country Strategy Papers, European Commission, Aid Delivery Methods -Project Cycle Management Guidelines, Vol 1, European Commission (2004)] and commonly found in policy making literature.

However, the previous steps are usually performed using a qualitative approach essentially based on intuition and the policy maker's expertise, even though more or less developed means to support the project management, e.g. the logistical framework, have been proposed. This lack of a systematic, quantitative and replicable approach leads to some downsides, the following being the most notable:
- Sub-optimization of the proposed policies and related investments;
- Difficulties in monitoring the efficiency of a policy;
- Difficulties in justifying with and reporting to the stakeholder the undertaken policies, because of the lack of supporting quantitative information.

In order to overcome such downsides, methodological and algorithmic approaches have been proposed, which can be used to deal with some of the analysis's steps leading to the making of a policy in a more or less quantitative way, but which sometimes are not systematically followed within the process of policy making.

Most of these approaches are used to the identify social needs. Because of the absence of quantitative approaches, this crucial step of policy making is usually affected by inertia related to implemented or currently being implemented policies and is stimulated by:
- Reference *groups* (political parties, interbranch organizations, etc.);
- External *events* (population ageing, immigration, etc.);
- *External institutional subjects* (e.g. answers to EU requests for the definition of regional action plans).

This approach, used to identifying the needs for the purposes of policy making, has the following disadvantages:
- Not all *groups* can access the communication of the need proportionally to its urgency. Some groups therefore cannot communicate their need event though it is an important need, while others can make a need urgent even though it is not so;
- Not all *events* have same impact and visibility. Events with current scarce visibility can have a deep impact in the future. It is not always easy to measure their impact either;
- The *external institutional subjects'* stimuli may no longer be appropriate to the actual local needs;
- Decision inertia can lead to over-representations of outdated needs.

These inconveniences can be partially overcome thanks to the huge amount of available data containing more or less relevant information to identify the needs and the levers on which to operate, usually with great detail in time and space. Among these the following retrievable data can be mentioned, without limitation and highlighting some representative indicators:
- Patents archives:
   ∘ USPTO;
   ∘ EPO;
   ∘ OECD REGPAT.

Data related to the number of patent applications by priority year, geographical area (up to NUTS3 level for some temporal ranges) and sector can be extracted or elaborated from these sources. Different normalizations are also available, e.g. per million inhabitants.
- Scientific publications archives:
   ∘ PubMed;
   ∘ arXiv;
   ∘ Google Scholar;
   ∘ Scopus Elvesier;
   ∘ Microsoft Academic;
   ∘ PLOS;
   ∘ Springer.
   Data related to different indicators can be extracted or elaborated from these sources, e.g.:
   ∘ Number of scientific publications;
   ∘ Number of international scientific publications;
   ∘ Share of most cited scientific publications;
- National and International statistical archives:
   ∘ ISTAT:
      ▪ Indicators related to the economic condition of families:
         - Relative and absolute poverty incidence;
         - Expenditure on transport;
         - Expenditure on healthcare;
      ▪ Indicators related to enterprises:
         - Percentage of enterprises buying cloud computing (CC) services;
         - Export share on PIL;
      ▪ Indicators related to transport:
         - Railway transport utilization rate;
         - Public transport of passengers in provincial capitals;
   ∘ EUROSTAT:
      ▪ Indicators related to enterprises:
         - Gross Value Added (GVA) per employee;
         - Enterprises' survival rate (3 years);
      ▪ Indicators related to transport:
         - Killed in road accidents per million inhabitants;
         - Injured in road accidents per million inhabitants;
      ▪ Indicators related to the economic situation:
         - Employment rate;
         - Material deprivation rate;
   ∘ ASR Lombardia;
   ∘ European Data Portal;
   ∘ EU Open Data Portal;
   ∘ Open Data Lombardia;
   ∘ Infocamere;
   ∘ Digicamere;
   ∘ Almalaurea.

However, having a huge amount of data describing the actions taken by a set of regions available and knowing their effects on a set of given performance indicators can help make a decision only if this information can be extracted from the data.

In the current state of the art, in the field of policy making data related to other regions are usually used in a quantitative way only to make comparisons and keep track, whereas they are used only in a qualitative and manual way during the actual making of a policy, leaving to the expert the task of extrapolating the proper course of action from the data.

The branch of science that enables the process of extraction of relevant information from the data is called "machine learning" (or more suggestively "artificial intelligence"). Machine Learning algorithms have become popular in many fields and applications in the past years: they allow cars to drive themselves, give personalized suggestions to users, make predictions on supply and demand trends, etc. Machine Learning techniques can learn a given relationship within data (training phase) from a more or less wide set of examples, defined as training set, thus generalizing this relationship to new samples belonging to the same statistical population where the training data were sampled from.

Machine Learning techniques are used also in the social-political-administrative context, but usually they are used only to support decisions regarding well-defined problems and not to identify the problems themselves, which is part of this invention. In [Gillingham (2016)] for example the authors show how Machine Learning techniques can be used to predict the risk of child abuse from a set of administrative data. In [Coglianese e Lehr (2017)] a deep analysis of the state of the art of Machine Learning techniques applied to the political-administrative context is given, but none of these applications are focused on the identification of the problems, as they are seen as a support to the solution of already-identified problems.

A huge inconvenience of current applications of Machine Learning techniques in the social-administrative context is the restriction of the analysis in the single area of interest: the examples thus belong to a statistical population of past policies related to the same phenomenon in the same reference area.

There is therefore no approach where all past policies made by a wide set of regions are identified as a statistical population on which to apply and adapt Machine Learning techniques in order to evaluate future policies' effects on the reference area. In order to apply and adapt Machine Learning techniques to the policy making process of a given region or geographical area R according to a given theme, two main requirements must be met: first of all, to evaluate the impact of a potential future policy from a set of past policies the latter must belong to the same statistical population of the former one; secondly, the regions belonging to the same statistical population of region R according to the given theme must be identified.

A context analysis based on a comparison with a set of reference regions is a common practice within the political-operative policy making, even though the usage of different regions combined with Machine Learning techniques is an innovative approach for policy making. Usually the reference regions are manually selected based on some similarity requirements related to the theme of interest. For example, if a region must be analyzed from a mobility point of view and it is mostly flat and urbanized, the regions identified for a comparison will not include rural districts or those with a strong presence of heights. This selection however is usually performed in a qualitative and no-systematic way.

Among the algorithmic approaches used to select the reference regions, the most noteworthy include the one developed by the European community to compare different European regions ("Benchmarking Regional Structure"), based on a structural similarity depending only on some characteristics that cannot be easily modified in the short run and that influence both the innovation and economic evolution. This approach is a good starting point because it formalizes the concept of representative structural characteristics according to a given theme but it is limited by (1) the fundamentally static nature of the identified clusters and (2) the lack of generalization with respect to the given theme and on which a future policy, not always related to innovation and economic evolution, must be evaluated. Other methodological and algorithmic approaches have been proposed in order to compare different regions. A methodological and algorithmic framework to identify similar regions is proposed in the technical report related to the guidelines S3 [Mikel Navarro, Juan Jose Gibaja et al., Regional Benchmarking in The Smart Specialisation Process: Identification Of Reference Regions Based on Structural Similarity, S3 Working Paper Series, 2014]. The article highlights the need to identify local advantages through a systematic comparison with other regions. From a methodological point of view, the main categories of variables, and possible related sources, are detected in order to find similarities between regions with respect to different points of view. A more detailed example, focused on the Basque Country, is given, which highlights the potential and peculiarities of the region with respect to competitor and neighboring regions. [Stephane Maraut, Helene Dernis,Colin Webb, Vincenzo Spiezia and Dominique Guellec, The Oecd Regpat Database: A Presentation Sti Working Paper 2008/2] instead documents the process of creation of the OECD REGAPT database , which identifies the geographical distribution of patents belonging to the more extensive international archives. The regionalization process, which deals with over 2000 regions belonging to the OECD member-states, involves the analysis of the applicants' addresses and a set of logical rules to clarify the ambiguous cases. The database is aimed at providing researchers with an instrument to study innovation at a regional level.

Even though the technology behind open data provides increasingly up-to-date data, their usage for policy making has the drawback that they represent the present situation and not the future one, whereas the process of policy making must anticipate problems before they arise in order to be efficient. Some methodological and algorithmic approaches, focused on the identification of the needs and sometimes of potential investments areas, have been proposed; many of them exploit social media and internet browsing data, another huge set of potentially useful data for the analysis of needs, and use Machine Learning techniques, such as regression, classification, sentiment analysis and natural language processing.

Among these approaches, the article [Askitas et al. (2009)] is particularly relevant, which describes a possible usage of Google Trends (former Google Insights) to detect the unemployment rate in Germany from the search engine users' interest in specific keywords using standard regression techniques. The model detects a reliable estimate of the unemployment rate and predicts its variation in the short term in a geographically localized way. This approach is particularly interesting because it overcomes the limit of the obsolescence of the available data. Article [Arunachalam et al. (2013)] instead shows the potential of social media for the Sentimental Analysis of citizens by the government agencies. In this article the activities of a group of social media (Twitter, Facebook, Flickr, Blog and News Feed) are analyzed and used to extract data related to relevant themes for an American social service agency. The article shows in a real case the identification of negative sentiments toward the delay in answering requests of economic support for people with disabilities by analyzing "hotwords" relevant for the context of interest. This strategy both identifies a social problem and a specific organizational problem on which it is possible to act, i.e. an investment area. Finally, [Camargo et al. (2016)] shows a localized and automated analysis of tweets related to the citizen's safety, applied to the city of Bogotà, Colombia. A supervised binary classifier classifies the real time messages detected by the system, and real-time maps of the citizens' perception of security are created.

One last problem related to the usage of huge amounts of data is the collection, filtering, transformation and visualization of the given data in order to support people making decisions and it is common to many sectors, from business economy to medicine, each with different solutions already proposed.

An example of how to collect, filter, transform and visualize the given data in order to support people making decisions is described in the document US-A-2017031958, which deals with the problem of the optimization of business performance.

A criticality for the legislator, apart from the drawbacks of the policy making process, is the communication of the policy. The process that leads to the making of a policy is usually not based on objective data, and therefore it is difficult for the legislator to explain its choices with the stakeholder, especially the population, unless the addressed needs are overt and collective needs of the majority.

This communication problem becomes even more relevant when making a policy that anticipates the needs before they present themselves, because the underlying need that is the object of the new policy may not be perceived as such by the stakeholder, especially the population. It is necessary to find an appropriate graphic representation of the data, as is the case in many fields of collection and visualization of huge amount of data. Examples can be drawn by many instruments and dashboards used in a lot of different areas, particularly business intelligence, such as Microsoft Power BI and many others.

Other downsides and limitations of current technologies and methodological approaches to extract and present quantitative information though predictive data analysis are related to the intelligibility of a relationship or a rule, because sometimes the graphic visualization of an indicator or a set of indicators does not show anomalies or trends.

There is therefore the need to improve a system and an automated method to extract and present quantitative information through predictive analysis of data capable of overcome at least one of the downsides described in the state of the art.

The aim of the present invention is the development of an automated system to extract and present quantitative information through predictive analysis of data capable of exploiting the huge amount of available data taken from open sources and social media and describing different indicators and variables across time and space.

Another aim of the present invention is the development of an automated system to extract and present quantitative information through predictive analysis of data capable of extracting quantitative indicators from these data that, by means of a suitable visualization, allow the making of policy adapted to the actual needs of the area.

Another aim of the present invention is the development of an automated system to extract and present quantitative information through predictive analysis of data capable of communicating the policy and the reasons that lead to its making in an intelligible and objective way.

Another aim of the present invention is the development of an automated system to extract and present quantitative information through predictive analysis of data capable of monitoring the trend of the implementation of a policy in an efficient way using quantitative and updated indicators.

Another aim of the present invention is the setting up of an automated method to extract and present quantitative information through predictive analysis of data.

The Applicant has studied, experimented and developed the present invention in order to overcome the downsides described in the state of the art and to achieve these and other advantages.

### EXHIBITION OF THE INVENTION

The present invention is expressed and formulated in the independent claims. The dependent claims exhibit other characteristics of the present invention or variant of the main solution's idea.

In accordance with the above objectives, an object of the invention is an automated system to extract and present quantitative information through predictive analysis of data, comprising:
- A configuration unit able to receive at input data related to at least a geographical area AG and at least one theme of interest T and to communicate with a process management unit including at least one processor;
- A storage and management unit for the data to be processed able to receive at input such data related to a given geographical area AG and a given theme of interest T;
- A data interrogation and retrieval unit able to interrogate the storage and management unit for the data to be processed based on the requests of the process management unit and to transfer such data to said process management unit;
- A data processing unit able to communicate with said process management unit which comprises: a unit to select the reference geographical areas, defined as the most similar geographical areas to the given geographical area AG with respect to the context indicators; a unit that identifies the critical performance indicators that present anomalies for the given geographical area AG with respect to the reference geographical areas; a unit that identifies the most relevant levers for the critical performance indicators; a unit that generates scenarios based on the relevant levers and the corresponding performance indicators;
- A storage and management unit for the processed data;
- A visualization and exporting unit able to display and export processed data related to the predictive analysis.

Another object of the invention is an automated method to extract and present quantitative information through predictive analysis of data, comprising of these steps:
a) Reception at input of the analysis configurations of:
   i. Geographical area AG;
   ii. Dataset for the set of context indicators;
   iii. Dataset for the set of performance indicators;
   iv. Dataset for the levers' indicators;
   v. Similarity function defined for each context and performance indicator and corresponding thresholds;
b) Selection of a set of reference geographical areas defined as the most similar geographical areas to AG with respect to the context indicators;
c) Identification of a set of critical indicators defined as the set of performance indicators which are anomalous in AG with respect to the reference geographical areas;
d) Identification of the relevant levers;
e) Definition of quantitative objectives on the levers and on the performance indicators through the generation of predictive scenarios;
f) Presentation of the results.

The automated system and method of the invention are based on artificial intelligence which ensures - based on a predictive analysis - a support to the making of political/operative policies to associate with strategies of economic growth and development of the research and innovation environment.

The developed method allows to select datasets and heterogeneous data sources for the automated editing of short and structured overviews to evaluate the needs of the area to associate with corresponding actions in order to reach measurables objectives.

The policy maker is aided in the definition of future strategies through a conceptual visualization based on a summary quadrant capable of stimulating deeper studies from the users and beneficiaries of the invention.

The unit of storage and management of the data to be processed can be linked to a system that asynchronously updates the data stored in the storage and management unit.

The present automated system overcomes the downsides related to policy making by permuting, adapting and incorporating concepts and technologies underlying artificial intelligence and Big Data.

In fact, whereas the known systems are based on the qualitative analysis of (1) Stakeholders, (2) Problems, (3) Objectives, (4) Strategies, in order to make connections with the available datasets the present system is based on the quantitative analysis of the following concepts:
1. The need, that quantifies all possible pairs of stakeholder/problems as a problem associated to one or more stakeholders, measured by a performance indicator, for example a low occupation rate of women between 25 and 34 years old;
2. The lever, seen as the intervention area on which the public administration can act and that must be identified in order to define policies, measured through a lever indicator (thereafter called simply levers);
3. The context, measured through indicators associated to characteristics that cannot be easily modified in the short run and that influence the way the levers affect the need in a geographical area;
4. The Objective, defined as a value to reach or a variation to achieve both on performance indicators and levers.

The usage of a great amount of available data, enabled by the mapping provided by the present system, is a key advantage of the present invention with respect to the state of the art, because on one hand it gives a more complete and updated picture thanks to the integration of data retrieved from heterogeneous and real-time sources, and on the other it gives objective quantitative and not qualitative values for the need and the investment areas, essential to define priorities among the policies.

Another advantage of the proposed method and system, specifically of the visualization and export unit, is the ability to give the Public operator and the legislator a means to consult, share and communicate the formulated policies and their motivations, supported by measurable data and intelligible rules that lead to their formulation. This instrument facilitates and accelerates the process of policy making for the public operator and the legislator, and the proposed method enables the sharing of the formulated and published policy with all the involved citizens and stakeholders in an objective and easily interpreted way. This is a huge advantage for public administration because it strengthens the public confidence; as stated in [Mohamed, M. (2016). Enhancing Citizens' Trust and Confidence in Government through Digital Transformation, in IJEGR, 12(1), IGI Global], transparency gained from open technologies contributes to a higher trust and confidence of the citizens in the public administration.

The proposed system can have a wide range of application:
- Individuation of material needs on which new investment actions can be activated;
- Formulation of strategic policies;
- Processing of documents to support the legislative action over themes related to innovation;
- Survey ex-post of the effectiveness of financial actions.

All these applications can be adapted in turn to different geographical levels based on different definitions of geographical areas. As an executive example the geographical areas are defined as NUTS2 level of the Nomenclature of Territorial Units for Statistics, NUTS, created by Eurostat in 1988.

### DRAWINGS

These and other aspects, characteristics and advantages of the present invention will become clear with the following description of some embodiments, given without limitations and with reference to the annexed figures:
- Fig. 1 is a schematic diagram that shows the architecture of the present automated system to extract and present quantitative information through predictive analysis of data, including the updating system for the data to be processed;
- Fig. 2 is an executive embodiment without limitations of a unit that displays and exports the data processed by the present system;
- Fig. 3 is a flow chart that shows the main steps of the present automated method to extract and present quantitative information through predictive analysis of data;
- Fig. 4 is a flow chart of the first sub-process that selects a set of reference geographical areas according to the present method;
- Fig. 5 is a flow chart of the second sub-process that identifies tha criticalities according to the present method;
- Fig. 6 is a flow chart of a third sub-process that selects the relevant levers according to the present method;
- Fig. 7 is a flow chart of another sub-process that defines the objectives according to the present method.

To enhance comprehension, same reference numbers were used to identify common elements in the figures when possible. Elements and characteristics of an embodiment can be properly incorporated in other embodiments without further details.

### EMBODIMENTS

In this section details of the many embodiments of the invention will be provided, for which some examples are provided in the annexed figures. Each example is given without any limitations. For example, the characteristics given or described as part of an embodiment could be used on or associated with other embodiments in order to create another embodiment. It is understood that the present invention will comprehend these changes and variations.

Before describing the embodiments, it must be clarified that the given description is not limited by its application to the details of the construction and components arrangements provided in the following description using the annexed figures. The following description may include other embodiments and be implemented in many other ways. It is also clarified that the following phraseology and terminology is used for descriptive purposes only and it is without limitations.

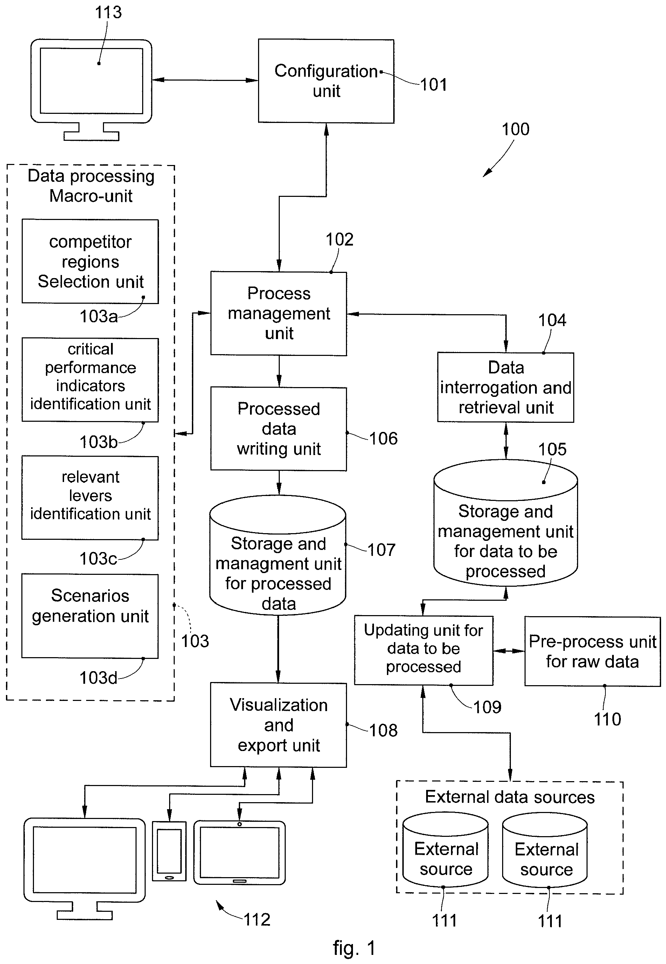

Fig. 1 shows a schematic diagram of the architecture of an automated system 100 to extract and present quantitative information through predictive analysis of data.

Such an automated system 100 includes a configuration unit 101 connected to a process management unit 102, including at least one processor and meant to bidirectionally exchange data with a data interrogation and retrieval unit 104, with a writing unit 106 that writes down the processed data and with a data processing unit 103, both provided of processors.

The given process management unit 102 manages the processing of the other units, as described in the following, and their exchange of data. The configuration unit 101 can be associated with any other processor 113 and receives at input the raw data to be processed, related to a theme of interest T and quantified on a wide set of geographical areas including the geographical area of interest AG, or some indication on the data to be processed if they have been already stored on another storage and management unit 105.

The indication on the data to be processed can be given as a list of indicators' names to be used as context, need or lever, or as the name of a theme, if the storage and management unit 105 includes not only the indicators but also a list of possible themes and the associations between indicators and themes, where the association identifies also a category among the three categories of context, need and lever.

The data interrogation and retrieval unit 104 communicates with the said storage and management unit 105. This unit 105 exchanges data with an updating unit 109 that updates the data to be processed, optionally cooperating with another pre-processing unit 110 that processes raw data.

The updating unit 109 that updates the data to be processed communicates with external data sources 111, e.g. those cited in the premise, such as patents archives, scientific publication archives, statistical data archives, social media, datasets etc.

The writing unit 106 which writes down the processed data communicates with another storage and management unit 107. This unit 107 transmits processed data to the visualization and exporting unit 108 that displays and exports processed data, also called interface.

The process management unit 102 exchanges data with another data processing unit 103, comprising: a unit to select comparison regions 103a; a unit to identify the critical performance indicators 103b; a unit to identify the relevant levers 103c associated to the critical performance indicators, and a unit that generates scenarios 103d.

The automated system 100 includes at least a CPU for each processing unit, for example the units 101, 102, 103, and a RAM depending on the maximum dimension of input data given to the unit identifying the relevant levers 103c. Units 101-111 should be placed on different machines; the machine communicates via TCP/IP and encrypted protocols. Connections should be direct wired connections with at least a speed of 1 Gb/s. The storage of the data should be performed on SSD drives. The storage and management units of both the processed and the to-be-processed data 107 and 105 should be placed on machines that parallelize the reading/writing operations required simultaneously from a wide number of users.

The storage and management unit 105 for the data to be processed includes the following data:
- A list of geographical areas;
- A list of themes;
- A set of time-space series defined on a set of time intervals and on all or a subset of the geographical area AG, where each series defines the value of an indicator in space and time;
- A set of associations between themes and indicators where the association between a theme and an indicator is one of the following three:
   ∘ Context;
   ∘ Performance;
   ∘ Lever;
- A set of similarity functions for each indicator described in the previous point.

The data interrogation and retrieval unit 104 interrogates the storage and management unit 105 based on the requests of the process management unit 102, retrieves the data to be processed and transmits them to the process management unit 102.

The dashed box of Fig. 1 shows the data processing unit 103, which comprises:
e.1) a unit 103a that selects a set of reference geographical areas and performs operations a, b, c and d:
   a) receives at input:
      i. a geographical area AG;
      ii. a set of indicators defined on a set of geographical areas including AG and on at least one time interval;
      iii. a similarity function between geographical areas;
   b) computes the similarity between AG and the other geographical areas;
   c) orders the geographical areas according to their similarity with AG;
   d) extracts a set of reference geographical areas most similar to AG, hereafter referred to as AGR;
e.2) a unit 103b that identifies the critical performance indicators and performs operations e, f, g and h:
   e. receives at input:
      i. a geographical area AG;
      ii. a set of indicators defined on a set of geographical areas AGR including AG and on at least one time interval;
      iii. a similarity function between geographical areas;
   f. extracts a time series S_rif representative of AGR for each indicator;
   g. computes the value of the similarity function f between the time series of AG, S_AG and the reference time series S_rif, f(I, S_AG, S_rif) for each indicator I;
   h. returns the list of indicators such that f(I, S_AG, S_rif) exceeds a predefined threshold value;
e.3) a unit 103c that identifies the relevant levers and performs operations I, j, k and l:
   i) receives at input:
      i. a geographical area AG;
      ii. an indicator, called criticality, defined on a set of geographical areas including AG and on at least one time interval;
      iii. a set of indicators, called levers, defined on the same set of geographical areas and the same time interval of the criticality;
   j) constructs a predictive model between the levers' indicators and each critical performance indicator;
   k) identifies for each critical performance indicator the subset of lever indicators that has a non-zero impact;
   1) returns the list of relevant levers and the corresponding impacts on the criticality;
e.4) a unit 103d that generates scenarios based on the levers' indicators and the associated critical performance indicators;

The automated system 100 includes also, as stated before, a storage and management unit 107 for the processed data which saves the complete or partial data processed by the data processing units, specifically the writing unit 106.

The automated system 100 includes also, as stated before, a visualization and export unit 108, also called interface, which displays the results and which ca be associated with any processor 112, e.g. a computer, a tablet, a smartphone etc.

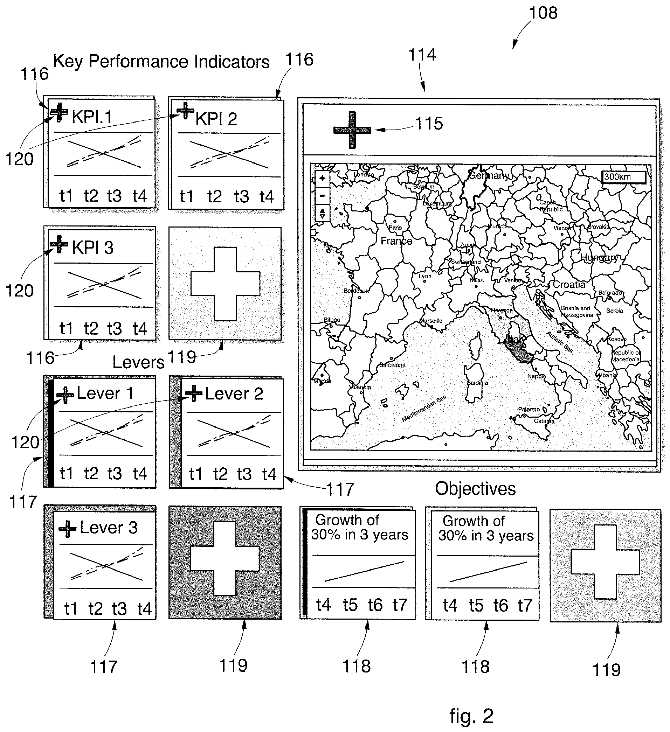

The visualization and export unit 108 (see Fig. 2) comprises:
- a graphic representation 114 of the outcome of the selection of the reference geographical areas, which includes at least the reference geographical areas and may include also a set of intelligible rules used for the selection of the reference geographical areas;
- for each critical performance indicator, a graphic representation 116 of its trend over time along with a comparison with the reference geographical areas;
- at least a button 115 that allows the user to access the unit that manages the list of critical performance indicators and add and/or remove elements from the list;
- for each relevant lever, a graphic representation 117 of the trend of the lever over time along with a comparison with the reference geographical areas;
- a graphic and textual representation 118 of the objectives identified on levers and performance indicators;
- a button 119 that allows the user to access the unit that manages the list of levers and add and/or remove elements from the list;
- for each critical performance indicator and for each lever, a button 120 that allows the user to access the graphic design unit and change the type of graphic representation among a set of predefined graphic representations;
- for each critical performance indicator, a button that allows the user to access:
   ∘ additional details;
   ∘ the rational under the automated or manual selection of the performance indicator, which is automatically generated according to the results of the selection of the performance indicators if the selection is automated, and is inserted by the user if the selection is manual;
   ∘ the graphic or textual representation of the relationship with the levers that are relevant for the performance indicator;
- for each lever, a button that allows the user to access:
   ∘ additional details;
   ∘ graphical or textual representation of the relationship with the performance indicators with respect to the lever is relevant;
- a button that allows the user to save the current quadrant, defined as the set of visualized graphical and/or textual representations;
- a button that allows the user to share the saved quadrants with other users;
- a button that allows the user to export the saved quadrants in different formats.

The predefined graphic representation of the interface 108 may include one or more of the following: histograms, scatterplot, colormap with colorscale based on the selected indicator (need, investment area or objective) for each region.

As another executive example of the interface, the user can save the created quadrants, share the saved quadrants with other users and export the quadrants in different formats, e.g. as a presentation with automatically generated links or Word or Pdf documents, using other buttons included in interface 108.

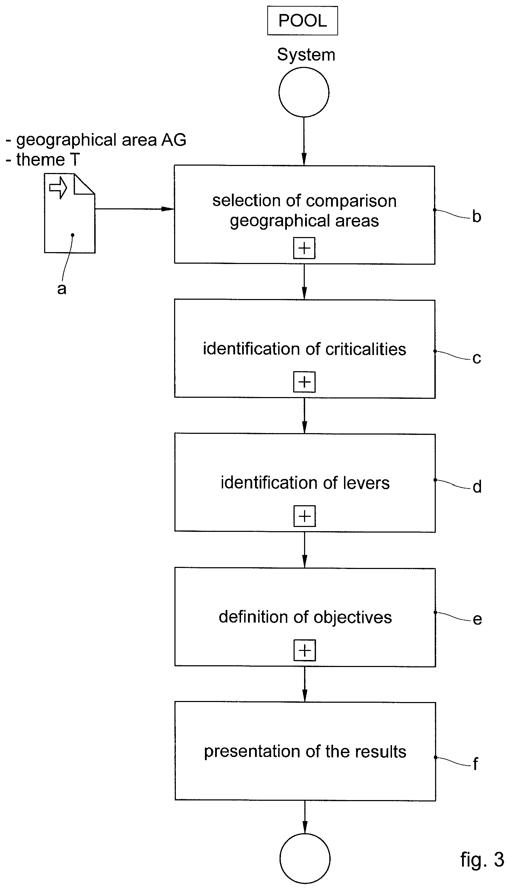

The present invention includes also an automated method to extract and present quantitative information through predictive analysis of data, see Fig. 3, that comprises the following steps:
a) Reception of input data by the configuration unit 101 for the analysis configurations parameters:
   i. Dataset for the set of context indicators;
   ii. Dataset for the set of performance indicators;
   iii. Dataset for the levers' indicators;
   iv. Similarity function defined for each context and performance indicator and corresponding thresholds;
b) Selection of a set of "reference geographical areas" or comparison geographical areas defined as those geographical areas more similar to AG with respect to the context indicators;
c) Identification of a set of criticalities defined as the set of anomalous performance indicators on Ag with respect to the reference geographical areas;
d) Identification of relevant levers;
e) Definition of the quantitative objectives on the levers and the performance indicators through the generation of predictive scenarios;
f) Presentation of the results.

The automated selection of the "reference geographical areas" is performed by unsupervised learning techniques.

The dataset, as briefly stated before, can be extracted from one or more of the following external data sources:
a) Patents archives;
b) Scientific publications archives;
c) Official national and international statistical archives;
d) Social media;
e) Web sources;
f) Other.

In the present method the reception at input of the analysis configuration comprises two steps, where the first can be performed once and for all and updated when necessary, while the second is performed before each application of the method.
Block 1:
   1.a) Reception at input of a set of geographical areas;
   1.b) Reception at input of a set of themes;
   1.c) Reception at input of a set of datasets;
   1.d) For each pair of theme-dataset assignment of a category among the three categories: (i) context (ii) performance (iii) lever;
   1.e) Transformation of each dataset in indicators, each defined as a matrix of time-space values, discretized in regions;
   1.f) Storage of the datasets and their associations to the themes inside a storage and management system;
   1.g) Association of a similarity function with each indicator.
Block 2:
   2.a) Reception at input of a geographical area AG belonging to the set of predefined geographical areas;
   2.b) Reception at input of a theme T belonging to the set of predefined themes;
   2.c) Recovery of the indicators categorized as "context" indicators for theme T from the storage and management system;
   2.d) Submission of the list of indicators associated to the "context" category for theme T to the user, called "context indicators" thereafter;
   2.e) Reception at input of any changes to the list of predefined context indicators for theme T;
   2.f) Updating of the list of context indicators;
   2.g) Recovery of the indicators categorized as "performance" indicators for theme T from the storage and management system;
   2.h) Submission of the list of indicators associated to the "performance" category for theme T to the user, called "performance indicators" thereafter;
   2.i) Reception at input of any changes to the list of predefined performance indicators for theme T;
   2.j) Updating of the list of performance indicators;
   2.k) Recovery of the indicators categorized as "levers" indicators for theme T from the storage and management system;
   2.l) Submission of the list of indicators associated to the "levers" category for theme T to the user, called "levers' indicators" thereafter;
   2.m) Reception at input of any changes to the list of predefined levers' indicators for theme T;
   2.n) Updating of the list of levers' indicators.

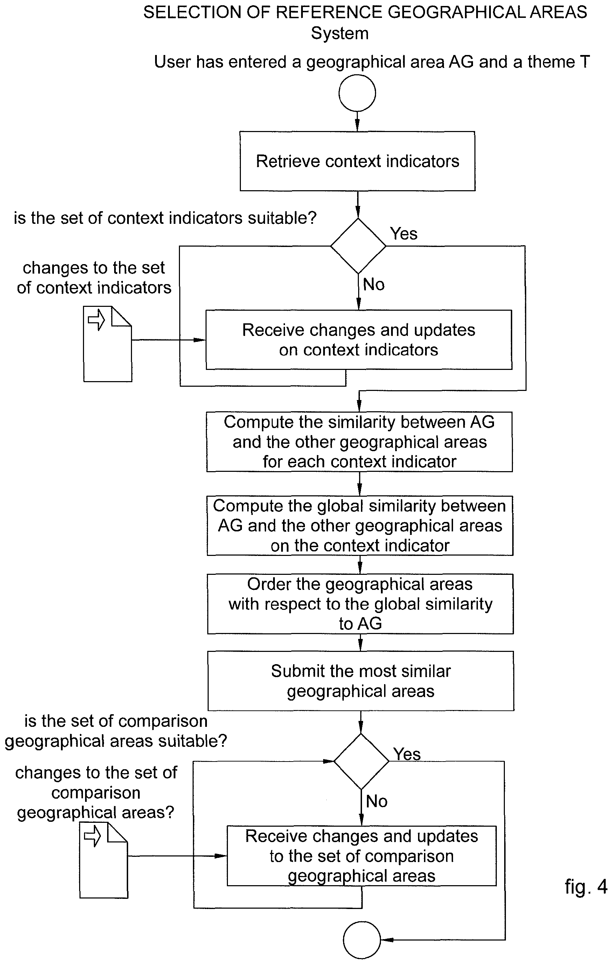

The reference geographical areas' selection step (see also the operations' sequence in Fig. 4) comprises:
a) Computation of the similarity between AG and the other geographical areas for each context indicator;
b) Computation of the global similarity between AG and the other geographical areas on the context indicators;
c) Ordering of the geographical areas with respect to the global similarity to AG;
d) Submission to the user of the most similar geographical areas;
e) Reception at input of any changes to the list of reference geographical areas;
f) Updating of the list of reference geographical areas.

The computation of the similarity function of point b) on pairs of time series may be preceded by an intermediated processing of each series based on predictive analysis techniques and functional analysis methods, in order to reach one or more of the following purposes:
a) Fill the missing points of the time series;
b) Predict the future trend of the series;
c) Extract the characteristic parameters of the series.

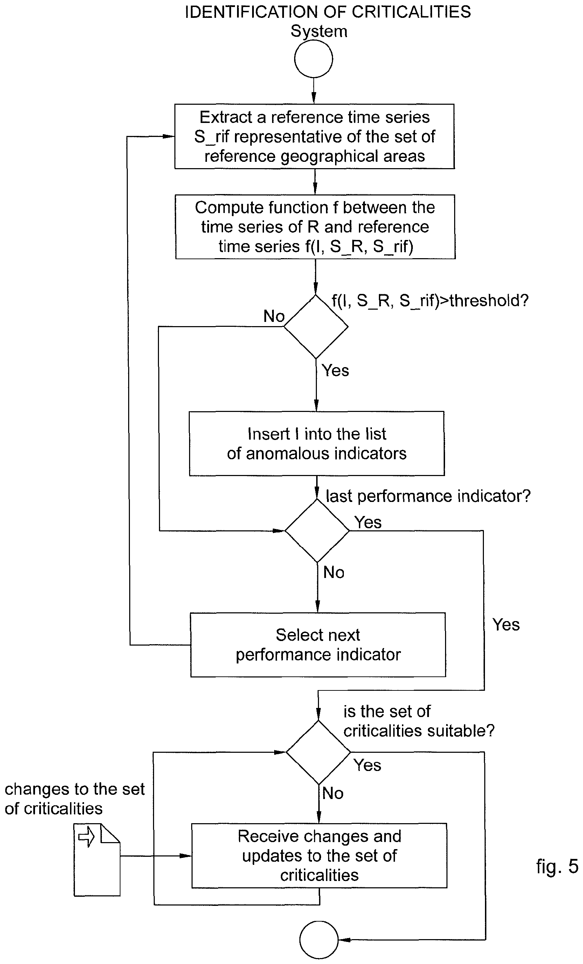

According to the present method, the identification of a list of criticalities (see also Fig. 5) comprises the following passages, where passages a, b and c are repeated for each indicator I belonging to the list of performance indicators:
a) Extraction of a reference time series S_rif representative of the set of reference geographical areas;
b) Computation of function f between the time series of R, S_R, and the reference time series S_rif, f(I, S_R, S_rif);
c) If f(I, S_R, S_rif) exceeds a predefined threshold, inclusion of I into the list of anomalous indicators;
d) Submission to the user of the list of critical performance indicators;
e) Reception at input of any changes to the list of critical performance indicators;
f) Update of the list of critical performance indicator.

The reference time series can be defined, as an example and without limitations, as:
a) The time series of the medium values across the regions, or geographical areas;
b) The time series of the median values across the regions, or geographical areas.

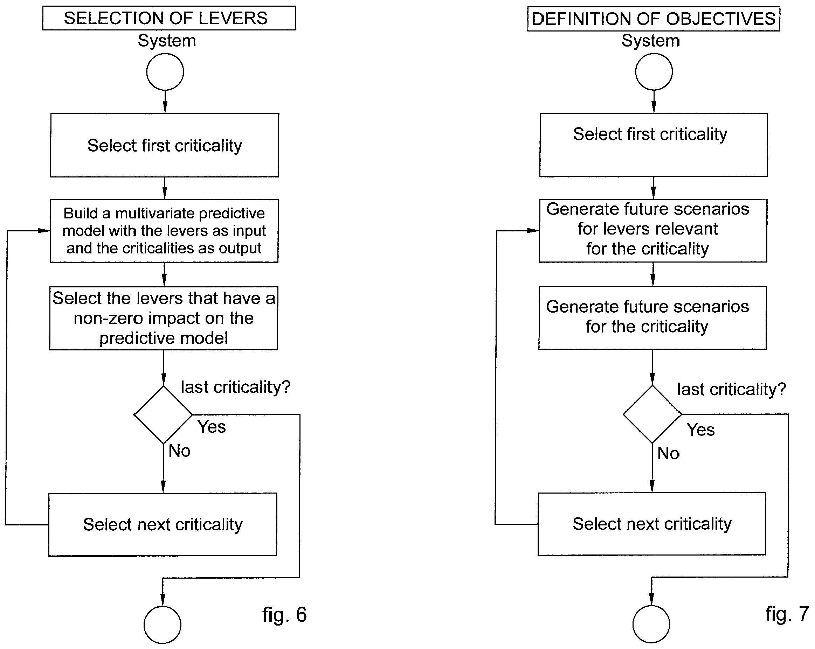

The levers selection or the relevant levers identification step (see Fig. 6) comprises the following passages for each indicator I belonging to the list of critical performance indicators:
a) Building of a multivariate predictive model through the training of a supervised learning algorithm which receives at input a set of samples defined as couples input/output where each couple identifies a geographical area: the input values are the levers' values for the geographical area and the output values are the critical performance indicators for the geographical area;
b) Selection of the levers that have a non-zero impact on the predictive model;
c) Generation of scenarios.

According to the present method, the definition of quantitative objectives (see also Fig. 7) comprises the following passages, repeated for each indicator I belonging to the list of critical performance indicators:
a) Generation of future scenarios for the levers starting from the initial values and of the trend of each lever for AG and each reference geographical area, including at least two types of scenario:
   i. Present scenario;
   ii. Best case scenario;
b) Definition of quantitative objectives for the levers as the values assumed by the levers in the "Best case scenario";
c) Generation of future scenarios for the critical performance indicators using the multivariate predicted model built in the step of identification of the relevant levers, giving at input the values assumed by the levers in the different scenarios;
d) Definition of quantitative objectives for the performance indicators as the values assumed by the performance indicators in the "Best case scenario".

The generation of the "Best case scenario" is performed by assuming that the trend of AG would follow the trend of the "best performing" set of geographical area, i.e. the subset of reference geographical area that better perform with respect to a single lever or the overall levers.

In the present method each theme T of point 2.b) of Block 2 previously described is defined as a n-tuple (T1, T2, ..., Tn) where each element Ti of the tuple with I=1,...,n belongs to a different set of options.

The set of options for each element of the tuple represents the leaves of a tree, and the user is guided in the selection of one option for each element of the tuple by selecting on each occasion a branch of the tree.

Each theme T can also be defined as a pair (AMB, TEC) where:
a) AMB is the field of interest among a set of predefined areas of interest;
b) TEC is a technological field among a set of predefined technological fields.

The association of a dataset D with a theme T and the assignment of a category to the relationship between dataset and theme (context, performance or lever) is performed semi-automatically starting from a set of manually associated datasets and using Natural Language Processing and Machine Learning techniques.

The transformation of point 1.e) of Block 1 previously described is performed starting from a limited set of points in time and space for an indicator, called target indicator, and a set of points for other indicators, called surrogate indicators, more complete with respect to time and space, using predictive algorithms that generalize the relationship between surrogate indicators and target indicators and fill the matrix for the target indicator.

As an executive example of the present invention, specifically of the unit 103b that identifies the critical performance indicators, a temporal trend is classified as anomalous with respect to the global trend if the distance between its time series and the reference time series retrieved by a predefined distance function is high, where the reference time series could be defined, without limitation, as:
- The time series of the medium values of the other regions;
- The time series of the median values of the other regions.

As an executive example of the present invention, the automated selection of the indicators following the automated selection of the reference geographical areas is performed by one or more distance functions defined on pairs of temporal series. A distance function could be defined and directly applied to the values of the series or the result of an intermediated processing of the series, e.g. the extraction of a slope or another characteristic parameter of the function from which the series is sampled, the prediction of the missing values inside the series or the prediction of the future values of the series. If more distance functions are defined, the function(s) that highlight(s) an indicator as anomalous is(are) stored and subsequently displayed to the user during the visualization step. Since the distance function that highlights an indicator as anomalous is displayed to the user, the latter can better understand the reason behind the choice of the indicator.

The identification of the levers involves the building of a multivariate predictive model through the training of a supervised learning algorithm which receives at input a set of samples defined as couples input/output where each couple identifies a geographical area: the input values are the levers' values for the geographical area and the output values are the critical performance indicators for the geographical area. The relevant levers are selected as the levers with the deepest impact in absolute terms on the indicator of the criticality. As an executive example the supervised learning algorithm used for the generation of the predictive model is a variable selection algorithm, e.g. lasso [Tibshirani (1996)]], elastic net [Zou e hastie (2005)] or decision trees whose output are "scatter" models, i.e. dependent on a subset of the input variables; lasso and elastic net define the impact of each lever as the weight of the variables associated to the lever in the predictive model, while for decision trees the impact is defined according to SHAP (SHapley Additive explanation) [Lundberg e Lee (2017)].

The definition of the objectives starts from the generation of an optimal scenario, called "best case scenario", for the levers from the initial values and the trend of each lever on AG and the reference geographical areas. The system then receives the values of the levers in the best case scenario at input for the multivariate predictive model built in the step of identification of the relevant levers in order to extract projections on the critical performance indicators. The quantitative objectives for the levers and the performance indicators are defined as the values assumed by the levers and the performance indicators in the best case scenario. As an executive example the projections of a lever could be computed assuming that the trend of AG follows the trend of the "best performing" geographical areas, i.e. the subset of reference geographical area that better perform with respect to the lever.

Finally, an important element of the present invention is the graphic representation of the selected indicators and the decisional rules that lead to the making of a policy. This representation, an example of which is given in the interface 108 of fig. 2, includes a set of graphics and images displaying:
1. The relationship between the geographical area AG and the other regions;
2. The trend of the identified needs, investment areas and objectives with respect to time and other regions;
3. The detailed rules that lead to the selection of the rules and the investment areas.

Furthermore, in order to have a deeper vision of the highlighted phenomenon for each indicator a collection of indicators coming from the same dataset or other datasets and identified as interesting for the selected indicator can be accessed. For the criticalities, the relevant indicators include the relevant levers; and from a lever it is possible to retrieve the criticalities for which the lever is relevant. The relationship between relevance is displayed in an intelligible way, e.g. using a relationship tree.

All graphics are automatically updated whenever there is a change of the data, making it useful both for the sharing of the results of the analysis and the monitoring of the trend of the relevant indicators. Finally, the user can change the layout of each element, editing a personalized page to be saved, shared or exported in different formats.

Another advantage of the system and the associated method is therefore the intelligible, personalized, always updated and exportable in different formats graphical visualization.

It is clear that changes can be made to the automated system and method to extract and present quantitative information through predictive analysis of data and/or steps and phases can be added, without leaving the context of the present invention as stated in the following claims.

It is also clear that an expert of the field could develop many other equivalent versions of the automated system and method to extract and present quantitative information through predictive analysis of data having the same characteristics stated in the following claims and thus belonging to its protection scope, even though the present invention has been described with reference to some specific examples.

In the following claims, the reference in brackets only ease the reading and must not be considered as limitative for the protection scope underlying the specific claims.

## Claims

1. Automated system to extract and present quantitative information through predictive analysis of data, comprising:
a configuration unit (101) able to receive at input data associated to at least one geographical area AG and at least one theme of interest T and communicates with a process management unit (102) including at least one processor;
a storage and management unit (105) for the data to be processed able to receive at input data associated to at least one geographical area AG and one file of interest T;
a data interrogation and retrieval unit (104) that interrogates said storage and management unit (105) for the data to be processed based on the requests of the process management unit (102) and that transfers these data to said process management unit (102);
a data processing unit (103) that communicates with said process management unit (102) which comprises: a unit to select reference geographical areas (103a), defined as the geographical areas most similar to a given geographical area AG with respect to context indicators; a unit to identify the critical performance indicators (103b) that are anomalous in a given geographical area AG with respect to the reference geographical areas; a unit to identify the relevant levers (103c); a unit that generates scenarios (103d) on the levers' indicators and corresponding performance indicators;
a storage and management unit (107) for the processed data;
a visualization and export unit (108) of the processed data and relating to the performed predictive analysis.

2. System as in claim 1, wherein the selection unit (103a) performs the following operations:
a) receives at input:
i. a geographical area AG;
ii. a set of indicators defined on a set of geographical areas including AG and on at least one time interval;
iii. a similarity function between geographical areas.
b) computes the similarity between AG and the other geographical areas;
c) orders the geographical areas according to their similarity with AG;
d) extracts a set of reference geographical areas most similar to AG, hereafter referred to as AGR.

3. System as in claim 1, wherein the critical performance indicators' identification unit (103b) performs the following operations:
a) receives at input:
i. a geographical area AG;
ii. a set of indicators defined on a set of geographical areas AGR including AG and on at least one time interval;
iii. a similarity function between geographical areas;
b) extracts a time series S_rif representative of AGR for each indicator;
c) computes the value of the similarity function f between the time series of AG, S AG and the reference time series S_rif, f(I, S_AG, S_rif) for each indicator I;
d) returns the list of indicators such that f(I, S_AG, S_rif) exceeds a predefined threshold value.

4. System as in claim 1, wherein the relevant levers' identification unit (103c) performs the following operations:
a) receives at input:
i. a geographical area AG;
ii. an indicator, called criticality, defined on a set of geographical areas including AG and on at least one time interval;
iii. a set of indicators, called levers, defined on the same set of geographical areas and the same time interval of the criticality;
b) builds a predictive model between the levers' indicators and each critical performance indicator;
c) identifies for each critical performance indicator the subset of lever indicators that has a non-zero impact;
d) returns the list of relevant levers and the corresponding impacts on the criticality.

5. System as in claim 1, wherein the visualization and export unit (108) includes a graphic interface provided with the following elements: a graphic representation (114) of the list of selected reference geographical areas; at least one button (115) that allows the user to access a graphic representation of the set of intelligible rules used to select the reference geographical areas; a graphic representation (116) of the trend of the subset of critical performance indicators; a graphic and textual representation (118) of the objectives identified on levers and performance indicators; a plurality of buttons (119) that allow the user to change the visualized list of indicators by selecting also non-automatically selected indicators; and a plurality of buttons (120) that allow the user to access additional utilities of the visualization and export unit (108).

6. Automated method to extract and present quantitative information through predictive analysis of data, comprising the following steps:
a) Reception at input of the analysis configurations of:
i. Geographical area AG;
ii. Dataset for the set of context indicators;
iii. Dataset for the set of performance indicators;
iv. Dataset for the levers' indicators;
v. Similarity function defined for each context and performance indicator and corresponding thresholds;
b) Selection of a set of reference geographical areas defined as the most similar geographical areas to AG with respect to the context indicators;
c) Identification of a set of critical indicators defined as the set of performance indicators which are anomalous in AG with respect to the reference geographical areas;
d) Identification of the relevant levers;
e) Definition of quantitative objectives on the levers and on the performance indicators through the generation of predictive scenarios
f) Presentation of the results;

7. Method as in claim 6, wherein the automated selection of the "reference geographical areas" of point b) is performed through unsupervised learning techniques.

8. Method as in claim 6, wherein the reception at input of the analysis configuration includes the two following blocks, i.e. block 1 and block 2, where the first can be performed once and for all and updated when necessary, while the second is performed before each application of the method:
Block 1:
1.a) Reception at input of a set of geographical areas;
1.b) Reception at input of a set of themes;
1.c) Reception at input of a set of datasets;
1.d) For each pair of theme-dataset assignment of a category among the three categories: (i) context (ii) performance (iii) lever;
1.e) Transformation of each dataset in indicators, each defined as a matrix of time-space values, discretized in regions;
1.f) Storage of the datasets and their associations to the themes inside a storage and management system;
1.g) Association of a similarity function with each indicator;
Block 2:
2.a) Reception at input of a geographical area AG belonging to the set of predefined geographical areas;
2.b) Reception at input of a theme T belonging to the set of predefined themes;
2.c) Recovery of the indicators categorized as "context" indicators for theme T from the storage and management system;
2.d) Submission of the list of indicators associated to the "context" category for theme T to the user, called "context indicators" in the following;
2.e) Reception at input of any changes to the list of predefined context indicators for theme T;
2.f) Updating of the list of context indicators;
2.g) Recovery of the indicators categorized as "performance" indicators for theme T from the storage and management system;
2.h) Submission of the list of indicators associated to the "performance" category for theme T to the user, called "performance indicators" in the following;
2.i) Reception at input of any changes to the list of predefined performance indicators for theme T;
2.j) Updating of the list of performance indicators;
2.k) Recovery of the indicators categorized as "levers" indicators for theme T from the storage and management system;
2.l) Submission of the list of indicators associated to the "levers" category for theme T to the user, called "levers' indicators" in the following;
2.m) Reception at input of any changes to the list of predefined levers' indicators for theme T;
2.n) Updating of the list of levers' indicators.

9. Method as in claim 8, wherein each theme T of point 2.b) of block 2 is defined as an n-tuple (T1, T2, ..., Tn) where each element Ti of the tuple with I=1,... ,n belongs to a different set of options.

10. Method as in claim 9, where the set of options for each element of the tuple represents the leaves of tree, and the user is guided in the selection of one option for each element of the tuple by selecting on each occasion a branch of the tree.

11. Method as in claim 8, wherein each theme T can also be defined as a couple (AMB, TEC) where:
a) AMB is the field of interest among a set of predefined areas of interest;
b) TEC is a technological field among a set of predefined technological areas.

12. Method as in claim 8, where the association of a dataset D with a theme T and the assignment of a category to the relationship between dataset and theme (context, performance or lever) is performed semi-automatically starting from a set of manually associated datasets and using Natural Language Processing and Machine Learning techniques.

13. Method as in claim 8, where transformation of point 1.e) of block 1 is performed starting from a limited set of points in time and space for an indicator, called target indicator, and a set of points for other indicators, called surrogate indicators, more complete with respect to time and space, using predictive algorithms that generalize the relationship between surrogate indicators and target indicators and fill the matrix for the target indicator.

14. Method as in claim 6, where the selection of reference geographical areas comprises the following steps:
a) Computation of the similarity between AG and the other geographical areas for each context indicator;
b) Computation of the global similarity between AG and the other geographical areas;
c) Ordering of the geographical areas with respect to the global similarity to AG;
d) Submission to the user of the most similar geographical areas;
e) Reception at input of any changes to the list of reference geographical areas;
f) Updating of the list of reference geographical areas.

15. Method as in claim 14, wherein the computation of the similarity function of point b) on pairs of time series is preceded by an intermediated processing of each series based on predictive analysis techniques and functional analysis methods, in order to reach one or more of the following purposes:
a) Fill in the time series with respect to any possible missing point;
b) Predict the future trend of the series;
c) Extract the characteristic parameters of the series.

16. Method as in claim 6, wherein the identification of a list of criticalities comprises the following passages, where steps a, b and c are repeated for each indicator I belonging to the list of performance indicators:
a) Extraction of a reference time series S_rif representative of the set of reference geographical areas;
b) Computation of function f between the time series of R, S_R, and the reference time series S_rif, f(I, S_R, S_rif);
c) If f(I, S_R, S_rif) exceeds a predefined threshold, inclusion of I into the list of anomalous indicators;
d) Submission to the user of the list of critical performance indicators;
e) Reception at input of any changes to the list of critical performance indicators;
f) Update of the list of critical performance indicators.

17. Method as in claim 16, wherein the time series is defined as:
a) The time series of the medium values across the regions, or geographical areas;
b) The time series of the median values across the regions, or geographical areas.

18. Method as in claim 6, wherein the relevant levers identification step comprises the following passages for each indicator I belonging to the list of critical performance indicators:
a) Generation of a multivariate predictive model through the training of a supervised learning algorithm which takes in input a set of samples defined as couples input/output where each couple identifies a geographical area: the input values are the levers' values for the geographical area and the output values are the critical performance indicators for the geographical area;
b) Selection of the levers that have a non-zero impact on the predictive model;
c) Generation of scenarios.

19. Method as in claim 6, wherein the definition of quantitative objectives comprises the following steps, repeated for each indicator I belonging to the list of critical performance indicators:
a) Generation of future scenarios for the levers starting from the initial values and of the trend of each lever for Ag and each reference geographical area, including at least two types of scenarios:
i. Present scenario;
ii. Best case scenario;
b) Definition of quantitative objectives for the levers as the values assumed by the levers in the "Best case scenario";
c) Generation of future scenarios for the critical performance indicators using the multivariate predicted model generated in the step of identification of the relevant levers, giving as input the values assumed by the levers in the different scenarios;
d) Definition of quantitative objectives for the performance indicators as the values assumed by the performance indicators in the "Best case scenario";

20. Method as in claim 19, wherein the generation of the "Best case scenario" is performed by assuming that the trend of AG would follow the trend of the "best performing" set of geographical area, i.e. the subset of reference geographical areas that better perform with respect to a single lever or the overall levers.

21. Method as in claim 6, wherein the datasets are extracted from one or more of the following external data sources: patents archives, scientific publications archives, official national and international statistical archives, social media, web sources, or other.
